(19) Europäisches Patentamt
European Patent Office
Office européen des brevets

(11) EP 1 520 691 A1

(12) # EUROPEAN PATENT APPLICATION

(43) Date of publication:
**06.04.2005 Bulletin 2005/14**

(51) Int Cl.⁷: **B32B 27/34**, C08G 69/36, B65D 65/40

(21) Application number: **04022231.7**

(22) Date of filing: **17.09.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **17.09.2003 JP 2003324460**

(71) Applicant: **Ube Industries, Ltd.**
**Ube-Shi, Yamaguchi 755-8633 (JP)**

(72) Inventors:
- **Nonaka, Hirofumi**
**O-Aza Kogushi Ube-shi**
**Yamaguchi 755-8633 (JP)**
- **Fukuda, Kimio**
**O-Aza Kogushi Ube-shi**
**Yamaguchi 755-8633 (JP)**
- **Emoto, Masahiko**
**O-Aza Kogushi Ube-shi**
**Yamaguchi 755-8633 (JP)**

(74) Representative: **Albrecht, Thomas, Dr. et al**
**Kraus & Weisert**
**Patent- und Rechtsanwälte**
**Thomas-Wimmer-Ring 15**
**80539 München (DE)**

(54) **Asymmetric multi-layer film having polyamide layer**

(57) In an asymmetric multi-layer film composed mainly of a polyamide layer and a thermoplastic layer, the polyamide layer is made of polyamide having a unit derived from an aminocarboxylic acid and/or a lactam compound, a unit derived from a diamine compound such as a branched alicyclic diamine having 6-16 carbon atoms, and a unit derived from a dicarboxylic acid compound, and the thermoplastic layer is made of thermoplastic resin other than the polyamide of the polyamide layer.



Printed by Jouve, 75001 PARIS (FR)

## Description

FIELD OF THE INVENTION

The present invention relates to an asymmetric multi-layer film having a polyamide layer.

BACKGROUND OF THE INVENTION

The asymmetric multi-layer film having a polyamide layer is favorably employed for enclosing a food therewith specifically to give a retort pouch food.

Japanese Patent Provisional Publication 2003-175543 discloses an asymmetric multi-layer film comprising a polyamide layer and an polyolefin layer and having a high resistance to curling, in which the polyamide layer comprises crystalline copolymer polyamide or a mixture of crystalline copolymer polyamide and amorphous polyamide and a polyolefin layer.

Japanese Patent Provisional Publication 2001-31761 discloses polyamide showing good stretchability, which comprises a unit derived from an aminocarboxylic acid or a lactam compound, a unit derived from a diamine compound comprising a branched alicyclic diamine having 6-16 carbon atoms, and a unit derived from a dicarboxylic acid compound. This polyamide specifically comprises 50 to 99.8 mol% of the unit derived from an aminocarboxylic acid or a lactam compound, 0.1 to 25 mol% of the unit derived from a diamine compound comprising a branched alicyclic diamine having 6-16 carbon atoms, and 0.1 to 25 mol% of the unit derived from a dicarboxylic acid compound.

SUMMARY OF THE INVENTION

The present invention has an object to provide an asymmetric multi-layer film having a polyamide layer, which shows a resistance to curling higher than the resistance shown by the known asymmetric multi-layer films having a polyamide layer such as the asymmetric multi-layer film disclosed in the above-mentioned Japanese Patent Provisional Publication 2003-175543.

The present invention resides in an asymmetric multi-layer film comprising a polyamide layer (referred hereinafter to as X) and a thermoplastic layer (referred hereinafter to as Y), wherein the polyamide layer comprises a unit-A derived from an aminocarboxylic acid or a lactam compound, a unit-B derived from a diamine compound comprising a branched alicyclic diamine having 6-16 carbon atoms, and a unit-C derived from a dicarboxylic acid compound, and the thermoplastic layer comprises thermoplastic resin other than the polyamide of the polyamide layer.

The preferred embodiments of the invention are described below.

(1) The polyamide layer and the thermoplastic layer are combined with each other via an adhesive layer.

(2) The asymmetric multi-layer film is produced by a co-extrusion method.

(3) The polyamide comprises 50 to 99.8 mol% (preferably 70 to 99.5 mol%) of the unit derived from an aminocarboxylic acid or a lactam compound, 0.1 to 25 mol% (preferably 0.25 to 15 mol%) of the unit derived from a diamine compound comprising a branched alicyclic diamine having 6-16 carbon atoms, and 0.1 to 25 mol% (preferably 0.25 to 15 mol%) of the unit derived from a dicarboxylic acid compound. Preferably, 10 to 100 mol% (more preferably 30 to 100 mol%, most preferably 50 to 100 mol%) of the diamine compound is the branched alicyclic diamine having 6-16 carbon atoms.

(4) The diamine compound comprises 10 to 100 mol% of the branched alicyclic diamine having 6-16 carbon atoms.

(5) The polyamide contains at least 1.5 mol% of a unit of the branched alicyclic diamine having 6-16 carbon atoms.

(6) The polyamide layer has a thickness of 10% to 40%, preferably 10% to 35%, more preferably 10% to 30%, based on the thickness of the multi-layer film.

(7) The aminocarboxylic acid and lactam compound are represented by the formulas (1) and (2), respectively:

$$H_2N\text{-}R^{11}\text{-}COOH \qquad (1)$$

in which $R^{11}$ is an alkylene chain having 2-20 carbon atoms,

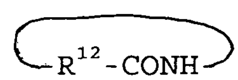

(2)

in which $R^{12}$ is an alkylene chain having 3-20 carbon atoms,
and the dicarboxylic acid compound is represented by the formula (3):

$$HOOC\text{-}(\text{-}R^{13}\text{-})_m\text{-}COOH \qquad (3)$$

in which $R^{13}$ is an alkylene chain having 1-20 carbon atoms or an hydrocarbon chain having 6-30 carbon atoms which comprises an aromatic group, and m is 0 or 1.

(8) The branched alicyclic diamine having 6-16 carbon atoms is 5-amino-2,2,4-trimethyl-1-cyclopentanemethylamine, 5-amino-1,3,3-trimethylcyclohexanemethylamine, or a mixture thereof.

(9) The thermoplastic layer comprises polyolefin.

(10) The polyolefin is low density polyethylene, linear low density polyethylene, or high density polyethylene.
(11) The polyolefin is polypropylene.
(12) The polyolefin is ethylene-α-olefin copolymer.
(13) The thermoplastic layer comprises poly(acrylic acid), poly(methyl acrylate), poly(methacrylic acid), or poly(methyl methacrylate).
(14) The thermoplastic layer comprises ethylene-vinyl acetate copolymer, ethylene-ethyl acrylate copolymer, or ionomer resin.
(15) The polyamide layer comprises at least 80 wt. %, preferably at least 90 wt.%, more preferably at least 95 wt.%, of the polyamide comprising the unit-A, unit-B, and unit-C.
(16) A method of enclosing a food with an asymmetric multi-layer film of the invention, to give a retort pouch food.

## BRIEF DESCRIPTION OF THE DRAWINGS

Fig. 1 illustrates a section of an asymmetric three-layer film according to the invention.
Each of Fig. 2-(1), Fig. 2-(2), and Fig. 2-(3) indicates the condition for measuring the curling of an asymmetric multi-layer film.

## DETAILED DESCRIPTION OF THE INVENTION

The asymmetric multi-layer film of the invention can be a two-layer film, a three-layer film, a four-layer film, a five-layer film, or a film comprising more than five layers. Typically, the multi-layer film is a three-layer film having a section illustrated in Fig. 1, which comprises an upper polyamide layer (X) 1, a lower other thermoplastic polymer (such as polyolefin) layer (Y) 2, and an adhesive layer 3. The multi-layer film may have one or more additional layers. The additional layer can be made of a thermoplastic polymer, a cured polymer, paper material, metal (such as aluminum), or woven or non-woven cloth. It is preferred, however, that the polyamide layer (X) is the uppermost layer and the other thermoplastic polymer layer (Y) is the bottom layer.

The polyamide layer (X) of the asymmetric multi-layer film of the invention comprises a unit-A derived from an aminocarboxylic acid and/or a lactam compound, a unit-B derived from a diamine compound comprising a branched alicyclic diamine having 6-16 carbon atoms, and a unit-C derived from a dicarboxylic acid compound.

The polyamide of the polyamide layer (X) preferably is a crystalline polyamide, and preferably shows a crystallization enthalpy of 2 J/g or more. The crystallization enthalpy can be determined by differential thermal analysis under the condition that the molten polyamide is cooled at a cooling rate of 40°K/min.

The polyamide of the polyamide layer (X) preferably contains a branched alicyclic diamine having 6-16 carbon atoms at 1.5 mol% or more, more preferably 1.7 mol% or more, most preferably 2.0 mol% or more. The content of the branched alicyclic diamine having 6-16 carbon atoms in the polyamide can be determined by the following calculation:

$$a = b/(x + y + z) \times 100$$

[a: content (%) of the branched alicyclic diamine having 6-16 carbon atoms in the polyamide;
b: total molar amount of the branched alicyclic diamine having 6-16 carbon atoms used for the preparation of polyamide;
x: total molar amount of an aminocarboxylic acid and/or a lactam compound used for the preparation of poly amide;
y: total molar amount of a diamine compound containing the branched alicyclic diamine having 6-16 carbon atoms used for the preparation of polyamide;
z: total molar amount of a dicarboxylic acid compound used for the preparation of polyamide.

The polyamide employed in the invention for the preparation of the polyamide layer (X) can be prepared by polymerizing an aminocarboxylic acid compound and/or a lactam compound, the diamine compound comprising a branched alicyclic diamine having 6-16 carbon atoms, and a dicarboxylic acid compound. The diamine compound and the dicarboxylic acid compound are preferably employed in a ratio of 0.9 to 1.1 (diamine/dicarboxylic acid), more preferably 0.93 to 1.07, most preferably 0.97 to 1.03.

The aminocarboxylic acid compound can be a compound having the following formula (1) and the lactam compound can be a compound having the following formula (2):

$$H_2N\text{-}R^{11}\text{-}COOH \qquad (1)$$

in which $R^{11}$ is an alkylene chain having 2-20 carbon atoms,

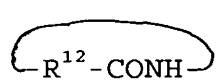

(2)

in which $R^{12}$ is an alkylene chain having 3-20 carbon atoms.

Examples of the aminocarboxylic acid compounds include aliphatic ω-aminocarboxylic acids having 5-20 carbon atoms such as 6-aminocaproic acid,

7-aminoheptanoic acid, 8-aminooctanoic acid, 10-aminocapric acid, 11-aminoundecanoic acid, and 12-aminododecanoic acid. Other aminocarboxylic acids such as an aromatic aminocarboxylic acid also can be employed.

Examples of the lactam compounds include aliphatic lactam compounds having 5 to 20 carbon atoms such as ε-caprolactam, ω-enantolactam, ω-undecalactam, ω-dodecalactam, and 2-pyrrolidone.

The diamine compound employed in the preparation of the polyamide of the invention comprises a branched alicyclic diamine having 6-16 carbon atoms. Examples of the branched alicyclic diamines having 6-16 carbon atoms include alicyclic diamine compounds having an alkyl group and/or an aminoalkyl group, such as 5-amino-2,2,4-tri-methyl-1-cyclopentanemethylamine and 5-amino-1,3,3-tri-methylcyclohexanemethylamine (which may be referred to as "isophoronediamine"). The diamine compound can be in the form of any isomers such as cis-isomer and trans-isomer. A mixture of the cis-isomer and the trans-isomer also can be employed.

Other diamine compounds can be used in combination with the branched alicyclic diamine having 6-16 carbon atoms.

Examples of the other diamine compounds include aliphatic diamine compounds having 2 to 20 carbon atoms such as ethylene diamine, triethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylenediamine, and 3-methylpentamethylenediamine.

The dicarboxylic acid compound preferably has the following formula (3):

$$HOOC\text{-}(\text{-}R^{13}\text{-})_m\text{-}COOH \qquad (3)$$

in which $R^{13}$ is an alkylene chain having 1-20 carbon atoms or an hydrocarbon chain having 6-30 carbon atoms which comprises an aromatic group, and m is 0 or 1.

Examples of the dicarboxylic acid compounds include aliphatic dicarboxylic acid compounds having 2-20 carbon atoms such as oxalic acid, succinic acid, glutaric acid, adipic acid, pimelic acid, suberic acid, azelaic acid, sebacic acid, and dodecane diacid; alicyclic dicarboxylic acid compounds such as 1,4-dicarboxycyclohexane; and aromatic dicarboxylic acids such as isophthalic acid, terephthalic acid and naphthalene dicarboxylic acid.

The polyamide of the invention can be produced by heating a mixture of a aminocarboxylic acid and/or a lactam compound, a diamine compound, and a dicarboxylic acid compound at an atmospheric pressure or increased pressure to cause polymerization, and if desired, further heating the mixture under reduced pressure to continue the polymerization.

The polymerization can be carried out preferably at a temperature of 150 to 300°C, more preferably 160 to 280°C, most preferably 180 to 250°C.

The period of time required for the polymerization generally is 0.5 to 30 hours.

The polymerization can be carried out by a batch system or a continuous system.

In the polymerization for production of the polyamide of the invention, one or more of appropriate additives can be employed for adjusting the molecular weight of the resulting polyamide or giving a polyamide which shows stable viscosity when the polyamide is molded or processed at an elevated temperature. Examples of the additives include monoamines and diamines such as laurylamine, stearylamine, hexamethylene diamine, and methaxylylene diamine, and monocarboxylic acids and dicarboxylic acids such as acetic acid, benzoic acid, stearic acid, adipic acid, sebacic acid, and dodecane diacid. These additives can be employed in such an amount to give a polymer having a relative viscosity of 1.5 to 5.0 (1 wt./vol.%, in concentrated sulfuric acid, 25°C).

Other additives can be heat resistant agents, UV absorbers, light stabilizers, oxidation inhibitors, antistatic agents, lubricants, slipping agent, crystallizing nuclei, tackiness agents, sealing improvers, antifoggants, releasing agents, plasticizers, pigments, dyes, perfumes, flame retardants, and reinforcing materials.

The thermoplastic layer (Y) can be a layer of polyamide other than the polyamide employed for the preparation of the polyamide layer (X), polyesters such as poly-(ethylene terephthalate) and poly(butylene terephthalate), polyolefin (e.g., low density polyethylene (LDPE), linear low density polyethylene (LLDPE), high density polyethylene (HDPE), polypropylene, ethylene-α-olefin copolymer, poly(acrylic acid), poly(methyl acrylate), poly-(methacrylic acid), or poly(methyl methacrylate), ethylene-vinyl acetate copolymer (EVA), saponified ethylene-vinyl acetate copolymer, ethylene-ethyl acrylate copolymer, or ionomer resin. The polyolefin preferably contains no acid-modified polyolefin such as polyolefin treated with maleic acid or maleic anhydride.

Examples of the polyamides employable for the preparation of the thermoplastic layer (Y) include nylons 4, 6, 7, 11, 12, 46, 66, 69, 610, 611, 612, 6T, 6I, MXD6, 6/66, 6/610, 6/611, 6/12, 6/612, 6/6T, 6/61, 6/66/610, 6/66/12, 6/66/612, 66/6T, 66/6I, 6T/6I, 66/6T/6I.

The asymmetric multi-layer film of the invention can be produced by co-extrusion methods. Examples of the co-extrusion methods include a T die method using a melt-extruding machine, an inflation method, and a tubular extrusion method.

The asymmetric multi-layer film of the invention is favorably employed as an extendable film material, particularly as a 2 step biaxiallly extendable film material.

The present invention is further described by the following examples. In the examples, the relative viscosity of the resulting polyamide, the crystallization enthalpy, and the curling were determined by the following procedures.

(1) Relative viscosity (ηr):

A prepared polyamide is dissolved in concentrated 96% wt.% sulfuric acid (concentration: 1 wt/vol %). The relative viscosity is measured at 25°C by means of an Ubbellohde viscometer according to the method defined in JIS-K6810.

(2) Crystallization enthalpy

Approximately 10 mg of polyamide is heated from 298°K to 523°K at a temperature increase rate of 40°K/min, kept at 523°C for 5 min., and cooled at a temperature decrease rate of 40°K/min. The crystalline enthalpy is measured in the course of performing the temperature decrease step. The measurement is conducted by means of DSC 210 (available from Seiko Instrument Co., Ltd.)

(3) Curling

The produced multi-layer film is cut to give a disc (diameter: 70 mm), and the disc is kept at 23°C, 65%RH for 24 hours. The curling of the disc is measured in the following manner.

1) In the case that curling is weak: The distance (L) between both edges of the curled disc is measured. See Fig. 2-(1).
2) In the case that curling is medium: The largest distance (L) between one curled side and another curled side is measured. See Fig. 2-(2).
3) In the case that curling is strong: The diameter (L) of a cylinder produced of the strongly curled disc is measured. See Fig. 2-(3).

The curling value (or degree of curling) is calculated according to the following equation:

$$\text{Curling value (\%)} = (70\text{ mm} - L\text{ mm})/70\text{ mm} \times 100$$

The smaller curling value means a higher resistance to curling.

[Preparation of Polyamide (PA-1)]

In a pressure-resistant reaction vessel (inner volume: 3,300 L) equipped with a stirrer, a thermometer, a pressure gauge, a pressure controller, and a polymer outlet were placed 935 kg of ε-caprolactam, 35 kg of isophoronediamine (VESTAMIN IPD, available from Degusa Japan Co., Ltd.), 30 kg of adipic acid, and 47 kg of distilled water. The inner gas of the reaction vessel was replaced with nitrogen gas by repeating the procedure of pressurizing and releasing nitrogen gas. Subsequently, the mixture in the reaction vessel was heated to 240°C. The mixture in the reaction vessel was stirred at 240°C for 4 hours, to carry out polymerization. Thereafter, the mixture was further heated to 270°C, and the pressure in the vessel was decreased to 0 MPa (gauge pressure). The mixture was further stirred at 270°C for 2.5 hours in a stream of nitrogen gas at a rate of 5,000 mL/min., to advance the polymerization. Subsequently, the stirring was ceased, and the produced polyamide was taken out in the form of a strand through the polymer outlet, cooled in water, and processed to give approx. 900 kg of polyamide pellets.

The polyamide pellets were then washed with running hot water (95°C) for 12 hours, and dried at 80°C, for 24 hours *in vacuo.*

The obtained polyamide (PA-1) had ηr of 3.60, a melting point of 211°C, and a crystallization enthalpy of 39.0 J/g.

[Preparation of Polyamide (PA-2)]

The procedures for the preparation of Polyamide (PA-1) were repeated except using 918 kg of ε-caprolactam, 44 kg of isophoronediamine, 38 kg of adipic acid, and 46 kg of distilled water, to obtain approx. 900 kg of polyamide pellets.

The polyamide pellets were then washed with running hot water, and dried.

The obtained polyamide (PA-2) had ηr of 3.46, a melting point of 208°C, and a crystallization enthalpy of 37.0 J/g.

[Preparation of Polyamide (PA-3)]

The procedures for the preparation of Polyamide (PA-1) were repeated except using 892 kg of ε-caprolactam, 58 kg of isophoronediamine, 50 kg of adipic acid, and 45 kg of distilled water, to obtain approx. 900 kg of polyamide pellets.

The polyamide pellets were then washed with running hot water, and dried.

The obtained polyamide (PA-3) had ηr of 3.43, a melting point of 203°C, and a crystallization enthalpy of 16.2 J/g.

[Example 1] Preparation of asymmetric multi-layer film

Polyamide (PA-1), adhesive resin (maleic acid-modified ethylene-α-olefin copolymer, ADMER NF 518, available from Mitsui Chemical Co., Ltd.), and LDPE (low density polyethylene, UBE POLYETHYLENE F-023, available from Ube Industries, Ltd.) were

charged into an air-cooled inflation co-extrusion machine (for preparation of three-layer film, available from Plabor Corp., for outermost layer: 65 mmϕ, for center layer: 45 mmϕ, for innermost layer: 65 mmϕ, diameter of die: 250 mmϕ). The air-cooled inflation co-extrusion was continuously carried out under the conditions of a surrounding temperature of 30°C, a polyamide temperature of 230°C, and BUR=1.53, to obtain an asymmetric three-layer film (outermost layer: PA-1 layer of 25 µm thick, center layer: adhesive resin layer of 5 µm thick, innermost layer: LLDPE layer of 70 µm thick).

The obtained three-layer film showed a curling value of 20%.

[Example 2] Preparation of asymmetric multi-layer film

The procedures of Example 1 were repeated except for replacing PA-1 with PA-2. The obtained three-layer film showed a curling value of 11%.

[Example 3] Preparation of asymmetric multi-layer film

The procedures of Example 1 were repeated except for replacing PA-1 with PA-3. The obtained three-layer film showed a curling value of 3%.

[Comparison Example 1] Preparation of asymmetric multi-layer film

The procedures of Example 1 were repeated except for replacing PA-1 with copolymer nylon 6/66 (UBE NYLON 5033B, ηr: 4.08, m.p.: 196°C, available from Ube Industries, Ltd.) containing 100 ppm of talc. The obtained three-layer film showed a curling value of 84%.

[Example 4] Preparation of asymmetric multi-layer film

The procedures of Example 1 were repeated except for replacing LDPE with ethylene-α-olefin copolymer prepared using a metallocene catalyst (UMERIT F1520NH, available from Ube Industries, Ltd.). The obtained three-layer film showed a curling value of 19%.

[Example 5] Preparation of asymmetric multi-layer film

The procedures of Example 4 were repeated except for replacing PA-1 with PA-2. The obtained three-layer film showed a curling value of 12%.

[Example 6] Preparation of asymmetric multi-layer film

The procedures of Example 4 were repeated except for replacing PA-1 with PA-3. The obtained three-layer film showed a curling value of 3%.

[Comparison Example 2] Preparation of asymmetric multi-layer film

The procedures of Example 4 were repeated except for replacing PA-1 with copolymer nylon 6/66 (UBE NYLON 5033B). The obtained three-layer film showed a curling value of 90%.

[Comparison Example 3] Preparation of asymmetric multi-layer film

The procedures of Example 4 were repeated except for replacing PA-1 with copolymer nylon 6/66 (UBE NYLON 5033B) containing 100 ppm of talc. The obtained three-layer film showed a curling value of 92%.

[Comparison Example 4] Preparation of asymmetric multi-layer film

The procedures of Example 4 were repeated except for replacing PA-1 with copolymer nylon 6/66 (UBE NYLON 5033B) containing 1,000 ppm of talc. The obtained three-layer film showed a curling value of 92%.

[Comparison Example 5] Preparation of asymmetric multi-layer film

The procedures of Example 4 were repeated except for replacing PA-1 with copolymer nylon 6/66 (UBE NYLON 5033B) containing 3,000 ppm of silica. The obtained three-layer film showed a curling value of 90%.

[Comparison Example 6] Preparation of asymmetric multi-layer film

The procedures of Example 1 were repeated except for replacing PA-1 with copolymer nylon 6/12 (UBE NYLON 7034B, ηr: 3.80, m.p.: 200°C, available from Ube Industries, Ltd.). The obtained three-layer film showed a curling value of 90%.

[Example 7] Preparation of asymmetric multi-layer film

The procedures of Example 1 were repeated except for replacing LDPE with ethylene-vinyl acetate copolymer (V115, available from Ube Industries, Ltd.). The obtained three-layer film showed a curling value of 20%.

[Example 8] Preparation of asymmetric multi-layer film

The procedures of Example 7 were repeated except for replacing PA-1 with PA-2. The obtained three-layer film showed a curling value of 15%.

[Example 9] Preparation of asymmetric multi-layer film

The procedures of Example 7 were repeated except for replacing PA-1 with PA-3. The obtained three-layer film showed a curling value of 7%.

[Example 10] Preparation of asymmetric multi-layer film

The procedures of Example 2 were repeated except for replacing LDPE with LLDPE (linear low density polyethylene). The obtained three-layer film showed a curling value of 10%.

[Example 11] Preparation of asymmetric multi-layer film

The procedures of Example 2 were repeated except for replacing LDPE with ethylene-ethyl acrylate copolymer. The obtained three-layer film showed a curling value of 12%.

[Example 12] Preparation of asymmetric multi-layer film

The procedures of Example 2 were repeated except for replacing LDPE with ionomer resin. The obtained three-layer film showed a curling value of 5%.

[Example 13] Preparation of asymmetric multi-layer film

The procedures of Example 2 were repeated except for replacing LDPE with ionomer resin. The obtained three-layer film showed a curling value of 3%.

[Example 14] Preparation of asymmetric multi-layer film

The procedures of Example 2 were repeated except for replacing LDPE with poly(acrylic acid). The obtained three-layer film showed a curling value of 14%.

[Example 15] Preparation of asymmetric multi-layer film

The procedures of Example 2 were repeated except for replacing LDPE with poly(methacrylic acid). The obtained three-layer film showed a curling value of 15%.

[Example 16] Preparation of asymmetric multi-layer film

The procedures of Example 2 were repeated except for replacing LDPE with poly(methyl methacrylate). The obtained three-layer film showed a curling value of 16%.

[Example 17] Preparation of asymmetric multi-layer film

The procedures of Example 2 were repeated except for replacing LDPE with poly(methyl acrylate). The obtained three-layer film showed a curling value of 18%.

[Example 18] Preparation of asymmetric multi-layer film

The procedures of Example 2 were repeated except for replacing LDPE with poly(ethylene terephthlate). The obtained three-layer film showed a curling value of 3%.

[Example 19] Preparation of asymmetric multi-layer film

The procedures of Example 2 were repeated except for replacing LDPE with HDPE (high density polyethylene). The obtained three-layer film showed a curling value of 17%.

[Example 20] Preparation of asymmetric multi-layer film

Polyamide (PA-1), adhesive resin (maleic acid-modified ethylene - α-olefin copolymer, ADMER NF 518), poly-(vinyl alcohol) (EVAL 105B, available from Kurray Co., Ltd), and ethylene-α-olefin copolymer prepared using a metallocene catalyst (UMERIT F222NH) were charged into an air-cooled inflation co-extrusion machine (for preparation of five-layer film, available from Plabor Corp.). The air-cooled inflation co-extrusion was continuously carried out under the same conditions as those of Example 1, to obtain an asymmetric five-layer film (outermost layer: PA-1 layer of 25 μm thick, intermediate layer comprising a center poly(vinyl alcohol) layer of 15 μm thick, an outer adhesive resin layer of 5 μm thick and inner adhesive resin layer of 5 μm thick, innermost layer: ethylene-α-olefin copolymer layer of 60 μm thick).

The obtained five-layer film showed a curling value of 22%.

[Example 21] Preparation of asymmetric multi-layer film

The procedures of Example 20 were repeated except for replacing PA-1 with PA-2. The obtained five-layer film showed a curling value of 14%.

[Example 22] Preparation of asymmetric multi-layer film

The procedures of Example 20 were repeated except for replacing PA-1 with PA-3. The obtained five-layer film showed a curling value of 5%.

[Comparison Example 7] Preparation of asymmetric multi-layer film

The procedures of Example 20 were repeated except for replacing PA-1 with copolymer nylon 6/66 (UBE NYLON 5033B). The obtained five-layer film showed a curling value of 92%.

[Comparison Example 8] Preparation of asymmetric multi-layer film

The procedures of Example 20 were repeated except for replacing PA-1 with copolymer nylon 6/12 (UBE NYLON 7034B). The obtained five-layer film showed a curling value of 91%.

[Comparison Example 9] Preparation of asymmetric multi-layer film

The procedures of Example 20 were repeated except for replacing PA-1 with copolymer nylon 6/66 (UBE NYLON 5033B) containing 3,000 ppm of silica. The obtained five-layer film showed a curling value of 92%.

## Claims

1. An asymmetric multi-layer film comprising a polyamide layer and a thermoplastic layer, wherein the polyamide layer comprises a unit derived from an aminocarboxylic acid or a lactam compound, a unit derived from a diamine compound comprising a branched alicyclic diamine having 6-16 carbon atoms, and a unit derived from a dicarboxylic acid compound, and the thermoplastic layer comprises thermoplastic resin other than the polyamide of the polyamide layer.

2. The asymmetric multi-layer film of claim 1, wherein the polyamide layer and the thermoplastic layer are combined with each other via an adhesive layer.

3. The asymmetric multi-layer film of claim 2, which is produced by a co-extrusion method.

4. The asymmetric multi-layer film of claim 1, wherein the polyamide layer comprises 50 to 99.8 mol% of the unit derived from an aminocarboxylic acid or a lactam compound, 0.1 to 25 mol% of the unit derived from a diamine compound comprising a branched alicyclic diamine having 6-16 carbon atoms, and 0.1 to 25 mol% of the unit derived from a dicarboxylic acid compound.

5. The asymmetric multi-layer film of claim 4, wherein the diamine compound comprises 10 to 100 mol% of the branched alicyclic diamine having 6-16 carbon atoms.

6. The asymmetric multi-layer film of claim 1, wherein the polyamide contains at least 1.5 mol% of a unit of the branched alicyclic diamine having 6-16 carbon atoms.

7. The asymmetric multi-layer film of claim 1, wherein the polyamide layer has a thickness of 10% to 40%, based on a thickness of the multi-layer film.

8. The asymmetric multi-layer film of claim 1, wherein the aminocarboxylic acid and lactam compound are represented by the formulas (1) and (2), respectively:

$$H_2N\text{-}R^{11}\text{-}COOH \quad (1)$$

in which $R^{11}$ is an alkylene chain having 2-20 carbon atoms,

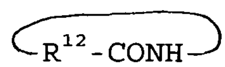

(2)

in which $R^{12}$ is an alkylene chain having 3-20 carbon atoms,
and the dicarboxylic acid compound is represented by the formula (3):

$$HOOC\text{-}(\text{-}R^{13}\text{-})_m\text{-}COOH \quad (3)$$

in which $R^{13}$ is an alkylene chain having 1-20 carbon atoms or an hydrocarbon chain having 6-30 carbon atoms which comprises an aromatic group, and m is 0 or 1.

9. The asymmetric multi-layer film of claim 1, wherein the branched alicyclic diamine having 6-16 carbon atoms is 5-amino-2,2,4-trimethyl-1-cyclopentanemethylamine, 5-amino-1,3,3-trimethylcyclohexanemethylamine, or a mixture thereof.

10. The asymmetric multi-layer film of claim 1, wherein the thermoplastic layer comprises polyolefin.

11. The asymmetric multi-layer film of claim 10, wherein the polyolefin is low density polyethylene, linear low density polyethylene, or high density polyethylene.

12. The asymmetric multi-layer film of claim 10, wherein the polyolefin is polypropylene.

13. The asymmetric multi-layer film of claim 10, wherein the polyolefin is ethylene-α-olefin copolymer.

14. The asymmetric multi-layer film of claim 1, wherein the thermoplastic layer comprises poly(acrylic acid), poly(methyl acrylate), poly(methacrylic acid), or poly(methyl methacrylate).

**15.** The asymmetric multi-layer film of claim 1, wherein the thermoplastic layer comprises ethylene-vinyl acetate copolymer, ethylene-ethyl acrylate copolymer, or ionomer resin.

**16.** A method of enclosing a food with an asymmetric multi-layer film of claim 1, to give a retort pouch food.

Fig. 1

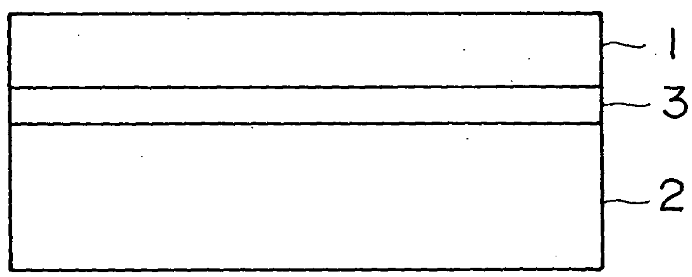

Fig. 2-(1)

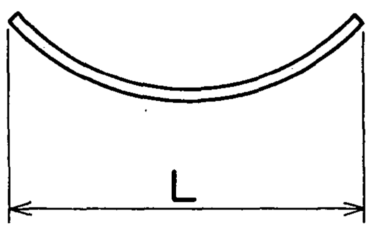


Fig. 2-(2)

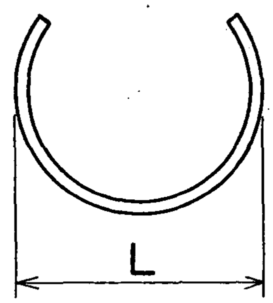


Fig. 2-(3)

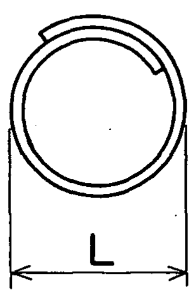

European Patent Office

# EUROPEAN SEARCH REPORT

Application Number
EP 04 02 2231

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 217 962 B1 (WERTH MICHAEL) 17 April 2001 (2001-04-17) * claims 1,7 * * column 2, line 31 - line 43 * * column 3, line 54 - line 56 * * column 4, line 53 - line 60 * * examples 1,11-14 * * table 3 * ----- | 1,2,5, 8-11, 14-16 | B32B27/34 C08G69/36 B65D65/40 |
| X | DE 44 38 546 A (BAYER AG) 2 May 1996 (1996-05-02) * claims 1,2 * * column 2, line 54 - line 57 * * example 1 * ----- | 1,3,5, 8-10,15, 16 | |
| X | US 5 418 068 A (CALUORI HANS-JOERG ET AL) 23 May 1995 (1995-05-23) * claims 1,9,21,22 * * table 1 * ----- | 1,5, 8-10,12, 16 | TECHNICAL FIELDS SEARCHED (Int.Cl.7) |
| X | GB 1 557 785 A (BASF AG) 12 December 1979 (1979-12-12) * claims 1,5,6 * * page 1, line 21 - line 22 * ----- | 1-3,8,10 | B32B C08G B65D |
| X | US 3 983 306 A (NIELINGER WERNER ET AL) 28 September 1976 (1976-09-28) * claims 1,4 * * column 2, line 49 - line 54 * * column 2, line 55 - line 59 * * column 3, line 4 - line 8 * ----- | 1-5, 8-10,16 | |

The present search report has been drawn up for all claims

| Place of search | Date of completion of the search | Examiner |
|---|---|---|
| The Hague | 12 November 2004 | Hillebrand, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 04 02 2231

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2004

| Patent document cited in search report | | Publication date | Patent family member(s) | | | Publication date |
|---|---|---|---|---|---|---|
| US 6217962 | B1 | 17-04-2001 | FR | 2758564 | A1 | 24-07-1998 |
| | | | CA | 2224501 | A1 | 20-07-1998 |
| | | | CN | 1192449 | A ,C | 09-09-1998 |
| | | | EP | 0854161 | A1 | 22-07-1998 |
| | | | JP | 10204174 | A | 04-08-1998 |
| DE 4438546 | A | 02-05-1996 | DE | 4438546 | A1 | 02-05-1996 |
| US 5418068 | A | 23-05-1995 | CH | 684747 | A5 | 15-12-1994 |
| | | | DE | 4142978 | C1 | 03-12-1992 |
| | | | EP | 0539894 | A1 | 05-05-1993 |
| | | | JP | 6220424 | A | 09-08-1994 |
| GB 1557785 | A | 12-12-1979 | DE | 2538892 | A1 | 10-03-1977 |
| | | | CH | 607953 | A5 | 15-12-1978 |
| | | | DK | 395076 | A | 03-03-1977 |
| | | | FI | 762418 | A | 03-03-1977 |
| | | | FR | 2322735 | A1 | 01-04-1977 |
| | | | SE | 7609618 | A | 03-03-1977 |
| US 3983306 | A | 28-09-1976 | DE | 2309420 | A1 | 07-11-1974 |
| | | | AT | 331039 | B | 26-07-1976 |
| | | | AT | 146074 | A | 15-10-1975 |
| | | | BE | 811450 | A1 | 22-08-1974 |
| | | | CA | 1017237 | A1 | 13-09-1977 |
| | | | CH | 585621 | A5 | 15-03-1977 |
| | | | DK | 153219 | B | 27-06-1988 |
| | | | FI | 57435 | B | 30-04-1980 |
| | | | FR | 2219003 | A1 | 20-09-1974 |
| | | | GB | 1414603 | A | 19-11-1975 |
| | | | IT | 1004332 | B | 10-07-1976 |
| | | | JP | 1173278 | C | 28-10-1983 |
| | | | JP | 49117580 | A | 09-11-1974 |
| | | | JP | 58008986 | B | 18-02-1983 |
| | | | NL | 7402470 | A ,B, | 27-08-1974 |
| | | | SE | 396913 | B | 10-10-1977 |

EPO FORM P0459

For more details about this annex : see Official Journal of the European Patent Office, No. 12/82